# EUROPÄISCHE PATENTANMELDUNG

(11) **EP 3 570 254 A1**
(43) Veröffentlichungstag der Anmeldung: **20.11.2019**
(21) Anmeldenummer: 19164269.3
(22) Anmeldetag: 21.03.2019
(51) Int. Cl.: G07B 15/04, G07F 19/00, G07B 15/00, G06Q 20/18, F16M 11/04, B60K 35/00, B60K 37/06

(54) **VON EINEM KRAFTFAHRZEUG AUS BETÄTIGBARES TERMINAL MIT DIEBSTAHLSICHERUNG**

(30) Priorität: 14.05.2018 DE 102018111388
(71) Anmelder: Bunz, Thomas, 88161 Lindenberg (DE)
(72) Erfinder: Bunz, Thomas, 88161 Lindenberg (DE)
(74) Vertreter: Riebling, Peter

(57) **Zusammenfassung**

Terminal (5, 30, 50) für die Betätigung von einem Fahrzeug (3) aus, bestehend aus mindestens einer Bedienfläche (24) mit ein oder mehreren Ein- und/oder Ausgabeeinheiten (6, 7), wobei das Terminal (5, 30, 50) in Abhängigkeit von der Position des Fahrersitzes (13) und/oder von der Position des Fahrers mindestens höhen-einstellbar ausgebildet ist, wobei das Terminal (5, 30, 50) mindestens teilweise in einer bodenseitigen, vertikalen Ausnehmung (53) versenkbar ist.

## Beschreibung

Die Erfindung betrifft ein Terminal für Ein- und Ausgabetätigkeiten und/oder Bezahltätigkeiten, die von einem Kraftfahrzeug aus getätigt werden und ist zum Beispiel für Drive-In-Schalter, Mautschalter, Parkhäuser, Bedienterminals für Waschstraßen und dergleichen Einfahrplätze geeignet.

Auf Einfahrplätzen der allgemeinen Art, wie sie oben stehend angegeben sind, besteht das Problem, dass von der Fahrerseite eines Kraftfahrzeuges aus der Fahrer des Kraftfahrzeuges das Terminal in einer guten Bedienhöhe bedienen soll, ohne Schwierigkeiten bei der Bedienung und Handhabung des Terminals zu haben. Diese Schwierigkeiten ergeben sich auch bei in der Höhe unterschiedlichen Fahrzeugen, wie z.B. Lastkraftwagen und Busse im Vergleich zu üblichen Personenkraftfahrzeugen.

Mit dem Gegenstand der DE 20 2015 002 295 U1 ist ein höheneinstellbares Terminal bekannt geworden, bei dem die Bedienelemente durch eine vertikale Bewegung der beweglichen Gehäuseteile in ihre Stellung an unterschiedliche Fahrzeughöhen angepasst werden, wodurch auch den Fahrern oder Insassen von niedrigen oder hohen Fahrzeugen die Bedienung erleichtert wird.

Mit dem Gegenstand der DE 10 2013 012 771 A1 ist ferner ein höheneinstellbares Terminal bekannt geworden, bei dem das Bedienfeld des Terminals über eine Teleskopmechanik dem Fahrerfenster des Kraftfahrzeuges angenähert werden kann. Die Teleskopmechanik wird derart angesteuert, dass das Bedienfeld an einer optimalen 3D-Position positioniert wird, die für den Fahrer durch das geöffnete Fahrerfenster hindurch eine optimale Bedienbarkeit des Bedienfeldes ermöglicht. Für die Höheneinstellung werden Sensoren verwendet, wie z. B. Bildsensoren oder Sensoren zur Ermittlung, ob oder wo ein Kraftfahrzeug steht.

Mit dem Gegenstand der US 2012/0032896 A1 wird ein Selbstbedienungsterminal mit einem darin angeordneten Bildschirm, der als Touchscreen-Bildschirm ausgebildet ist, um so den Bildschirm mit seinen Eingabeelementen an den Fahrer anzupassen.

Nachteil dieser Anordnung ist, dass lediglich der Bildschirm verschoben wird, dass aber Eingabe, wie z. B. ein Münzeinwurf, ein Kartenleser nicht gegen Diebstahl oder Beschädigung geschützt sind und ferner dass auch Zugangstüren, die zu einem Gehäuse der genannten Art gehören, nicht gegen Einbruch geschützt sind.

Mit der US 4,735,289 wird ein Bedienterminal mit Tasten und Bildschirm beschrieben, wie es lediglich an einer Hubschiene angeordnet ist und die auch ein Münzeinwurf und einen Kartenleser beinhaltet.

Auch hier besteht das Problem, dass das genannte Terminal nicht gegen Diebstahl geschützt ist, und es kann leicht aufgebrochen oder entwendet werden.

Der Erfindung liegt deshalb die Aufgabe zugrunde, ein Terminal für Ein- und Ausgabetätigkeiten und/oder Bezahltätigkeiten, die von einem Kraftfahrzeug so auszuführen sind, so weiterzubilden, dass das Terminal stets in einer optimal bediengerechten Position zum Fahrersitz und der auf dem Fahrersitz befindlichen Person ausgerichtet werden kann und dass zusätzlich ein Diebstahl- und Entwendungsschutz gegeben ist.

Zur Lösung der gestellten Aufgabe ist die Erfindung durch die technische Lehre des Anspruches 1 gekennzeichnet.

Vorteilhaftes Merkmal der Erfindung ist demnach, das Terminal mindestens teilweise in einer bodenseitigen, vertikalen Ausnehmung (bevorzugt als Sicherung gegen Diebstahl) versenkbar ist und bei Annäherung eines Kraftfahrzeuges aus der versenkten Position in eine für den Fahrer des Kraftfahrzeuges optimale Bedienungsposition bringbar ist..

Mit der gegebenen technischen Lehre ergibt sich der Vorteil, dass das Terminal wahlweise zu bestimmten Zeitpunkten teilweise oder vollständig in eine bodenseitige Ausnehmung versenkt werden kann.

In einer bevorzugten Ausgestaltung ist vorgesehen, dass das Terminal vollständig in einer bodenseitigen, vertikalen Ausnehmung versenkbar ist und bei Annäherung eines Kraftfahrzeuges aus der versenkten Position in eine für den Fahrer des Kraftfahrzeuges optimale Bedienungsposition bringbar ist.

In einer bevorzugten Weiterbildung ist vorgesehen, dass das Terminal vollständig in die Ausnehmung einfahrbar ist und dort diebstahl- und vandalismus-gesichert gelagert ist.

Ein solcher Schutz gegen Diebstahl oder Vandalismus kann dadurch erfolgen, dass die bodenseitige Öffnung, welche das Terminal vollständig aufnimmt, durch einen geeigneten Verschluss, wie z.B. einen Schiebe- oder Klappdeckel verschliessbar ist.

Daher wird es bevorzugt, dass nach jedem Bezahlvorgang das Terminal vollständig in eine bodenseitige Öffnung eingefahren wird, um so gegen Vandalismus und Beschädigung geschützt zu sein.

In einer ersten Ausgestaltung ist vorgesehen, dass das Terminal in Richtung seiner Längserstreckung in eine zugeordnete, sich mindestens über die gesamte Länge des Terminals erstreckende bodenseitige Ausnehmung einfahrbar ist. Damit wird eine stehende Versenkung des Terminals vorgeschlagen. Für diesen Verschiebeantrieb können verschiedene Antriebsarten verwendet werden, wie z.B. Teleskopfedern, Hubfedern, Hubgestelle, Schraubspindeln und dergleichen mehr. Bevorzugte Ausführungsformen dieser Hubantriebe sind Gegenstand der Unteransprüche.

In einer zweiten Ausgestaltung kann es vorgesehen sein, dass das Terminal um eine fußseitige, horizontale Achse verschwenkbar ist und liegend in eine im Wesentlichen horizontal ausgerichtete Ausnehmung in der Bodenöffnung versenkbar ist. Bei dieser 2. Ausgestaltung wird eine große Hublänge für die Antriebsorgane vermieden, wie sie bei der stehenden Versenkung des Terminals erforderlich sind.

Es ist bekannt, dass es bei den Einfahrsituationen in Parkhäuser und ähnlichen Einfahrtgassen vorkommt, dass die dort angeordneten Terminals durch bodenseitige Schienen gegen Anstoß gesichert werden müssen, was bei der vorliegenden Erfindung entfallen kann.

Bei der Erfindung können bodenseitige Schienen und Abweisbleche und ähnliche Schutzeinrichtungen entfallen, weil vorgesehen ist, dass das Terminal mindestens teilweise oder ganz in den Erdboden nach jedem Bezahlvorgang versenkt wird, was bisher noch nicht bekannt war.

Eine teilweise Versenkung kann beispielsweise dergestalt erfolgen, dass das Terminal so weit in den Erdboden versenkt wird, dass es gegen Anprall von Stoßstangen oder anderen Kraftfahrzeugteilen geschützt ist. Es kann in einer anderen Ausführung auch vollständig im Boden versenkt werden.

Ein weiterer Vorteil der teilweisen oder vollständigen Versenkbarkeit des Terminals in einer bodenseitigen Öffnung ist, dass das Terminal damit gegen Vandalismus, Diebstahl oder Anprall durch Kraftfahrzeugteile oder gegen Aufbrechen geschützt ist.

Die bodenseitige Vertiefung kann so tief ausgebildet sein, dass das Terminal mit seiner gesamten Länge vollständig in die bodenseitige Ausnehmung eingefahren werden kann und dann die bodenseitige Öffnung durch einen Verschließdeckel abgeschlossen werden kann, der verschiebbar betätigt ist.

In einer anderen Ausgestaltung kann es vorgesehen sein, dass das Terminal nur teilweise in die bodenseitige Ausnehmung hinein gefahren wird, was mit dem Vorteil verbunden ist, dass das Terminal auf diese Weise gegen Aufbruch geschützt ist, denn in der Regel haben Terminals eine seitliche oder frontseitige Zugangstür, welche den Innenraum des Terminals für Reparatur- und Wartungszwecke zugänglich macht. Die Zugangstür wird zusammen mit dem absenkbaren Terminal in die bodenseitige Öffnung mindestens teilweise eingefahren und ist deshalb dann nicht mehr zu öffnen. Bei einem teilweisen Einfahren der Zugangstür wird mindestens die untere Türkante der Zugangstür der Innenwandung der bodenseitigen Ausnehmung gegenüber liegen und deshalb kann die Zugangstür auch bei teilweiser Versenkung des Terminals nicht mehr geöffnet werden.

Bei vollständigem Versenken des Terminals ist die Tür ohnedies nicht mehr erreichbar und gegen unbefugtes Öffnen oder gegen Beschädigung geschützt.

In einer bevorzugten Ausgestaltung der Erfindung ist vorgesehen, dass das diebstahlgesicherte Terminal einen modularen Aufbau aufweist. Ein modularer Grundrahmen ist dabei auf dem Null-Niveau der Aufstellebene befestigt.
Der Grundrahmen besteht vorteilhaft im Wesentlichen aus zwei voneinander beabstandeten, U-förmigen vertikalen Schienen, in denen Rollenführungen für die Längsführung des daran verschiebbar geführten Hubrahmens vorhanden sind.

Der auf dem Grundrahmen in vertikaler Richtung verfahrbare Hubrahmen besteht aus einem abgekanteten U-Profil, welches in das U-Profil des Grundrahmens eingreift und dort an den Rollen entlang rollt, so dass der Hubrahmen über eine lange vertikale Verschiebestrecke auf dem ortsfesten Grundrahmen in vertikaler Richtung verschiebbar geführt ist und eine Einheit bildet, so dass der Hubrahmen am Grundrahmen gegen Wegnahme gesichert gehalten ist.

Vorteilhaft ist, dass der Hubrahmen in eine tiefe bodenseitige Ausnehmung in vertikaler Richtung einfahrbar ist, so dass mindestens Teile des Gehäuses des Terminals in der bodenseitigen Ausnehmung verschwinden und von den Innenwänden abgedeckt sind, so dass diese Teile des Gehäuses gegen Öffnung geschützt sind.

Eine solche Konstruktion, bestehend aus bodenseitig befestigten Grundrahmen und einem am Grundrahmen vertikal verfahrbaren Hubrahmen, der eine untere Trägerplatte aufweist, auf dem das Gehäuse des Terminals befestigt ist, hat den Vorteil, dass man nun auf beliebige Weise ein Terminalgehäuse auf der unteren Trägerplatte des Hubrahmens befestigen kann und damit stets für verschiedene Terminalformen eine diebstahlsichere Ausbildung erreicht.

Demnach ist es vorteilhaft, wenn das Gehäuse des Terminals auf der Trägerplatte mit Schrauben befestigt ist, weil somit eine große Montagefreiheit besteht, weil unterschiedliche Terminalgehäuse auf dem Hubrahmen montiert werden können. Nachdem der untere Teil des Gehäuses des Terminals als erster Bestandteil des Gehäuses in der bodenseitigen Ausnehmung verschwindet, ist diese Montagestelle besonders gut gegen Aufbrechen geschützt.

Daher bezieht sich die Erfindung nicht nur auf Terminals für Ein- und Ausfahrsituationen bei Parkgaragen und dergleichen, sondern auch für Terminals an Banken, Cashpoints, Waschanlagen und dergleichen mehr.

Auch bei Waschanlagen ergibt sich der weitere Vorteil, dass ein solches Gehäuse eines Terminals gegen Verschmutzung, gegen Bespritzen oder gegen andere Umwelteinflüsse dadurch gesichert werden kann, dass es teilweise oder vollständig in den Erdboden eingefahren werden kann, wodurch Korrosionsschäden am Terminal durch einwirkende Flüssigkeiten vermieden werden.

Beim Einfahren des Terminals mitsamt seinen Bedienungselementen in die bodenseitige Ausnehmung besteht der weitere Vorteil, dass das Terminal in diesem Zustand nicht bedienbar ist und dass auch die Bedienelemente des Terminals gegen Vandalismus und Beschädigung geschützt sind.

Somit wird bei der Erfindung vorausgesetzt, dass bei der ersten Ausführungsform, nämlich beim Einfahren des Kraftfahrzeuges in den Einfahrplatz, an dem seitlich das Terminal angeordnet ist, eine Typenerkennung des Fahrzeuges stattfindet und zwar in der Weise, dass mindestens die Position des Fahrersitzes im Fahrzeug erkannt werden kann, um so auf die Höhe des Fahrersitzes und so wiederum auf eine optimale Bediensituation in Bezug auf das seitlich angeordnete Terminal zu schließen.

Hierbei wird vorausgesetzt, dass der Fahrer das Seitenfenster herunterfährt und über das geöffnete Seitenfenster das seitlich angeordnete Terminal bedienen soll.

Somit ist erfindungsgemäß in einer ersten einfachen Ausführungsform vorgesehen, dass die Höheneinstellung des Terminals in Abhängigkeit vom Fahrzeugtyp erfolgt. Die Typenerkennung kann in einer ersten Ausführung durch die funkgestützte Übertragung einer fahrzeugtypischen Identitätskennung vom Fahrzeug zum Terminal erfolgen. Viele der modernen Fahrzeuge sind nämlich in der Lage, eine fahrzeugtypische ID, die vom Fahrzeug erzeugt wird, funkgestützt in die Umgebung zu übertragen. Aus dem Empfang und der Auswertung der fahrzeugtypischen ID im Terminal wird aufgrund der bekannten Fahrzeugabmessungen und der dadurch bekannten Sitzhöhe des Fahrersitzes eine optimale Höheneinstellung des Terminals vorgesehen.

Neben einer Typenerkennung des Kraftfahrzeuges über eine frontseitig angeordnete Kameraeinheit, gibt es auch andere Möglichkeiten, den Typ des Fahrzeuges und somit die Position des Fahrersitzes zu erkennen.

In einer weiteren Ausbildung der Erfindung ist es deshalb vorgesehen, dass ein Deckensensor oberhalb des Einfahrplatzes angeordnet ist, der von der Decke aus ein Radarfeld und/oder ein Ultraschallmessfeld und/oder ein IR-Messfeld auf das Fahrzeug richtet, um so ebenfalls den Fahrzeugtyp zu erkennen. Damit wird die dachseitige Kontur des Fahrzeuges erkannt und somit auch die Position der Windschutzscheibe und des hinter der Windschutzscheibe angeordneten Fahrersitzes.

In einer dritten Ausgestaltung kann es vorgesehen sein, dass das Fahrzeug anhand der verwendeten Achsen erkannt wird, wobei normale Kraftfahrzeuge mit zwei Achsen von Zweiradfahrzeugen unterschieden werden können und auch Mehrachsfahrzeuge, wie z. B. Lastkraftwagen und dergleichen, erkannt werden können, um so eine genauere, fahrzeugtypen-gerechte Erkennung des Fahrzeuges zu ermöglichen und so die optimale Position des Fahrersitzes und somit auch des Fahrers zu ermitteln. Aufgrund dieser ermittelten Position wird nach einem ersten Ausführungsbeispiel der Erfindung nunmehr das Terminal in seiner Höhe eingestellt, und zwar so weit, dass die Bedienfläche des Terminals mit gegebenenfalls dort angeordneten Ein- und Ausgabeeinheiten, sowie Bezahleinheiten in optimal bediengerechter Gegenüberstellung zum Fahrerfenster gelangt.

Es kann auch vorgesehen sein, dass das Terminal eine Datenbank mit einer Vielzahl von Fahrzeugtypen gespeichert hat. Wir ein bestimmter Fahrzeugtyp erkannt, werden seine Daten aus der Datenbank des Terminal ausgelesen und für die Ansteuerung des Hubantriebs verwendet.

Die Einstellung des Terminals erfolgt bevorzugt in der Z-Richtung, wobei die Fahrtrichtung in X-Richtung und die um 90° versetzte Richtung zur X-Richtung die Y-Richtung bezeichnet.

In einer Weiterbildung der Erfindung ist es vorgesehen, dass das mindestens höheneinstellbare Terminal auf einer Verkehrsinsel montiert ist und die Verkehrsinsel selbst modularartig aufgebaut ist, um so an unterschiedlichen Einfahrplätzen ein Modul, bestehend aus Verkehrsinsel und darauf montiertem, höheneinstellbaren Terminal, beliebig verlegen zu können.

In einer ersten Ausgestaltung der Erfindung ist die Höheneinstellung des Terminals durch eine Hubeinrichtung bewirkt, die in einer bevorzugten Ausgestaltung aus einer um ihre Längsachse drehbar angetriebenen Hubspindel besteht, die mit einer entsprechenden Mutter kämmt, die mit dem Hubfahrwerk verbunden ist, sodass der gesamte Ständer des Terminals zusammen mit allen Teilen mit der Hubeinrichtung an- und abgehoben werden kann.

Die Hubspindel wird von einem Antriebsmotor über ein Winkelgetriebe angetrieben und sitzt auf einer Trägerplatte auf, die ihrerseits in eine Ausnehmung einer Fundamentplatte in der Verkehrsinsel absenkbar ist.

Eine bevorzugte Hubhöhe ist zum Beispiel ein Betrag von 20 bis 60 cm, worauf die Erfindung jedoch nicht beschränkt ist.

Statt einer mechanischen Hubeinrichtung, die von einer drehend angetriebenen Hubspindel mit einem Antriebsmotor gebildet ist, kommen selbstverständlich auch andere Höheneinstelleinrichtungen in Betracht, wie zum Beispiel eine pneumatische, hydraulische oder elektromagnetische Hubeinrichtungen.

Bei der pneumatischen Höheneinstellung erfolgt der Hubantrieb über einen Pneumatikzylinder, während beim hydraulischen Hubantrieb der Antrieb über einen hydraulischen Hubzylinder erfolgt.

Beim elektromagnetischen Hubantrieb kann dies entweder durch eine Zahnstange mit einem Ritzel erfolgen oder durch ein Scherengetriebe, welches aufgrund der Spreizbarkeit der Schere eine Hubeinstellung ermöglicht.

Die Art und Anordnung der Hubeinrichtung kann hierbei unterschiedlich sein.

In einer bevorzugten Ausgestaltung ist es vorgesehen, dass die Hubeinrichtung als rückwärtige modulare Einheit am Gehäuse des Terminals befestigt ist und das Terminal insgesamt durch die Hubeinrichtung anhebbar und absenkbar ist.

Nachdem sich beim Anheben des gesamten Terminals zusammen mit der Standsäule ein bodenseitiger Freiraum ergibt, wird es bevorzugt, wenn dieser Freiraum mit einem faltenartigen Abdeckbalg abgedeckt ist.

In einer anderen Ausgestaltung der Erfindung kann es vorgesehen sein, dass die Hubeinrichtung im Terminal selbst integriert ist und beispielsweise im Bereich der Hubsäule selbst angeordnet ist.

Dabei ist die Hubsäule in sich teleskopierbar und besteht zum Beispiel aus einer bodenfesten Bodensäule, auf der eine Obersäule angeordnet ist, die in Z-Richtung verschiebbar angetrieben ist.

In einer Weiterbildung der Erfindung kann es auch vorgesehen sein, dass die Hubrichtung nicht vertikal in der Z-Ebene erfolgt, sondern dass die Hubrichtung schräg zur Z-Richtung erfolgt, das heißt in einem Winkel zur Vertikalen, sodass zum Beispiel vorgesehen sein kann, dass je höher das Terminal von der Bodenplatte abgehoben wird, desto stärker wird die Neigung des Bedienfeldes in Richtung das Fahrerfenster verändert, um noch eine bessere Bedienbarkeit der Bedienfläche zu ermöglichen. Damit neigt sich das Bedienfeld des Terminals beim Hochfahren dem Fahrerfenster zu.

Bei der Einfahrsituation von Kraftfahrzeugen in einen Einfahrplatz mit einem seitlich angeordneten Terminal kommt es oft vor, dass das Kraftfahrzeug schräg auf den Einfahrplatz gefahren wird und somit eine Kollisionsgefahr mit dem dort stehenden Terminal besteht.

Erfindungsgemäß ist nun vorgesehen, dass das Terminal in der Fahrebene des Fahrzeuges bewegbar auf dem Einfahrplatz angeordnet ist, und zumindest in Y-Richtung (quer zur Fahrzeuglängsachse), vorzugsweise jedoch in X- und Y-Richtung verschiebbar angetrieben ist.

Sobald das Fahrzeug mit seiner Frontseite auf den Einfahrplatz fährt, wird der Abstand der Fronseite des Fahrzeugs zum Terminal, vorzugsweise über eine Distanzmessung erkannt und das Terminal fährt aus dem Fahrbereich des Kraftfahrzeuges heraus, vor allem dann, wenn dieses schräg auf den Einfahrplatz fährt, um eine Kollision der Frontseite des Fahrzeugs mit dem Terminal zu vermeiden.

Es handelt sich also um eine Abstandsmessung des Abstandes zwischen dem Terminal und dem Kraftfahrzeug, um eine bestimmte tolerierbare Distanz zwischen dem Kraftfahrzeug und dem Terminal zu gewährleisten, ohne dass die Gefahr besteht, dass Teile des Kraftfahrzeuges mit dem Terminal kollidieren. Somit kann der Verschiebeantrieb des Terminals dieses aus dem Kollisionsbereich des Fahrzeuges heraus verschieben, wenn das Fahrzeug auf den Einfahrplatz fährt, an dessen Seite das höheneinstellbare Terminal angeordnet ist.

Erst wenn das Kraftfahrzeug fest auf dem Einfahrplatz fixiert steht, wird das Terminal durch eine Bewegung in der X- und/oder Y- und/oder Z-Ebene an die Fahrerseite des Kraftfahrzeugs herangefahren, um so eine optimale Erreichbarkeit der Bedienfläche des Terminals vom Fahrersitz zu erreichen.

In einer bevorzugten Ausgestaltung der Erfindung ist es vorgesehen, dass die Verschiebungen in X- und Y-Richtung des Terminals über senkrecht zueinander bewegbar angetriebene X-Y-Schlitten erfolgt.

Hierauf ist die Erfindung nicht beschränkt. Es kann jede beliebige Bewegungssteuerung erfolgen, beispielsweise kann das Terminal auch auf gekrümmten, bogenförmigen Bewegungsschienen angeordnet sein. Bei der letztgenannten Ausführungsform ist lediglich wichtig, dass eine Kollision des Terminals mit dem Kraftfahrzeug auf dem Einfahrplatz mit Sicherheit vermieden wird. Dies erfolgt bevorzugt über eine Distanzmessung zwischen dem Terminal und dem Kraftfahrzeug und dass nach erfolgter Einfahrposition des Kraftfahrzeuges auf dem Einfahrplatz das Terminal nunmehr bediengerecht in optimaler Einstellhöhe und Einstellkoordinaten (X, Y, Z) an die Fahrerseite des Kraftfahrzeuges in die optimale Höhe der Bedienfläche herangefahren wird. Die Distanzmessung kann auch von der Deckenseite in Richtung auf das Fahrzeug und das Terminal erfolgen.

Ebenso kann in allen beschriebenen Ausführungsformen vorgesehen sein, dass das Terminal nicht auf einer Bodenfläche steht, sondern von einer Decke abgehängt ist.

Die oben genannten Merkmale des Verschiebeantriebs in X- und/oder Y-Richtung korrespondiert stets mit der Höheneinstellbarkeit des Terminals in Z-Richtung, das vor oder nach erfolgter Bedienung des Terminals ganz oder Teilweise in einer bodenseitigen Ausnehmung versenkbar ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: Schematisierte erste Ausführungsform eines höheneinstellbaren Terminals in Bezug zu einem Kraftfahrzeug, welches auf einem Einfahrplatz steht.
Figur 2: Die erste Ausführungsform des Terminals mit Höheneinstelleinrichtung im Schnitt.
Figur 3: Die gleiche Darstellung wie Figur 2 in der Rückansicht.
Figur 4: Der Schnitt durch die Anordnung nach Figur 2 und 3.
Figur 5: Eine zweite Ausführungsform eines Terminals mit einer höheneinstellbaren Hubsäule.
Figur 6: Die Seitenansicht des Terminals der Figur 5 mit der Darstellung einer zusätzlichen Neigbarkeit des Terminals.
Figur 7: Die Stirnansicht eines Kraftfahrzeuges auf einem Einfahrplatz mit Darstellung weiterer Einzelheiten im Vergleich zu Figur 1.
Figur 8: Eine gegenüber den vorherigen Ausführungsbeispielen erweitertes Ausführungsbeispiel, bei dem das Terminal in X- und/oder Y-Richtung, und zusätzlich zur Z-Richtung, bewegbar angetrieben ist.
Figur 9: Die Bediensituation des in X-, Y- und Z-Richtung verschiebbar angetriebenen Terminals in Bezug zum Kraftfahrzeug.
Figur 10: eine vergrößerte Darstellung der Figur 3 mit Darstellung weiterer Einzelheiten
Figur 11: eine vergrößerte Darstellung der Figur 4 mit Darstellung weiterer Einzelheiten
Figur 12: eine vergrößerte Darstellung nach Figur 2 mit Darstellung weiterer Einzelheiten

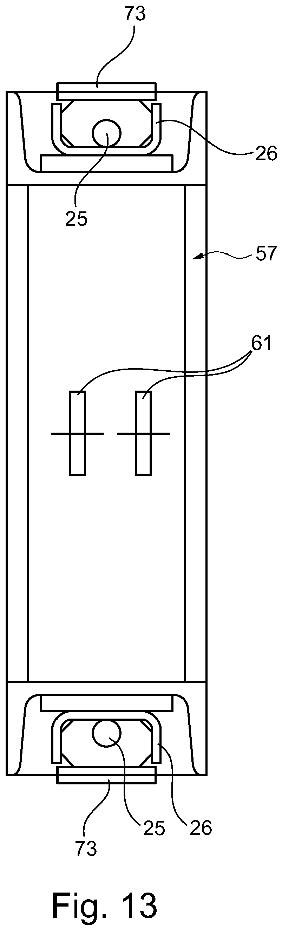

Figur 13: ein Ausschnitt aus der Figur 4 in vergrößerter Darstellung
Figur 14: die Seitenansicht des Hubrahmens
Figur 15: die Vorderansicht des Hubrahmens nach Figur 14
Figur 16: schematisiert die Darstellung des Hubrahmens
Figur 17: die Verbindung zwischen dem Hubrahmen und dem Grundrahmen in vereinfachter Darstellung
Figur 18: eine Darstellung der vollständigen Versenkung des Terminals in stehender Lage in einer bodenseitigen Ausnehmung
Figur 19: eine gegenüber Figur 18 abgewandelte Darstellung bei der das Terminal in einer liegenden Stellung in einer bodenseitigen Ausnehmung angeordnet ist.

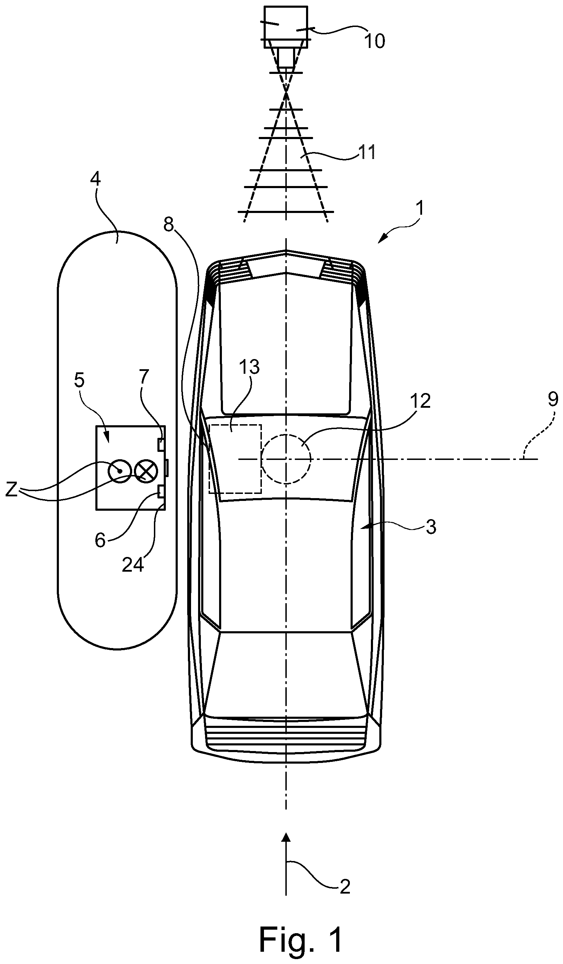

Figur 1 ist auf einem Einfahrplatz 1 ein Fahrzeug 3 in Pfeilrichtung 2 aufgefahren und die optimale Bediensituation für ein auf einer Verkehrsinsel 4 montiertes Terminal 5 wäre dergestalt, dass eine Bedienungsposition 9 des Fahrers zum Terminal 5 eingenommen werden sollte, bei der sich der Fahrersitz 13 etwa gegenüberliegend zu der Bedienfläche 24 des Terminals 5 befindet.

In einem bevorzugten Ausführungsbeispiel kann das Terminal 5 an seiner Bedienfläche Ein- und Ausgabeeinheiten 6 und/oder Bezahleinheiten 7 aufweisen.

Es sollte dafür gesorgt werden, dass die Höhe der Bedienfläche 24 so gewählt ist, dass sie etwa dem Fahrerfenster 8 gegenüberliegt.

Zu diesem Zweck sieht die Erfindung vor, dass das Terminal 5 höheneinstellbar in der Z-Richtung - wie in Figur 1 durch die Pfeile in der Zeichenebene dargestellt - ausgebildet ist.

In einer ersten Ausgestaltung der Erfindung kann es vorgesehen sein, dass die Höheneinstellung des Terminals 5 durch eine Typenerkennung des Fahrzeugtyps mithilfe einer frontseitig angeordneten Kamera 10 erfolgt, welche ihr Blickfeld 11 auf die Frontseite des Fahrzeuges richtet, beispielsweise die Frontscheibe mit dem dahinter angeordneten Lenkrad 39 erkennt und möglicherweise auch den Kopf des Fahrers, um vom Kopf des Fahrers auf die Sitzposition des Fahrers zurückzuschließen und entsprechend die Höheneinstellung in der Z-Richtung des Terminals 5 durchzuführen.

In einer alternativen Ausführungsform kann es auch vorgesehen sein, dass die Typenerkennung des Kraftfahrzeuges 3 durch einen Deckensensor 12 erfolgt, der an der Decke des Einfahrplatzes 1 angeordnet sein kann oder der an einem geeigneten Galgen angeordnet ist, um so den dachseitigen Umriss des Fahrzeuges zu erkennen und somit ebenfalls von oben die Art und Anordnung der Frontscheibe und den hinter der Frontscheibe angeordneten Fahrersitz 13 zu erkennen.

Der Deckensensor 12 kann zusätzlich zur Kamera 10 vorgesehen sein oder die Kamera 10 kann entfallen und es kann nur der Deckensensor 12 verwendet werden.

Selbstverständlich ist es auch möglich, eine Seitenerkennung des Kraftfahrzeuges 3 vorzunehmen, wobei dann an der Seitenlinie des Fahrzeuges eine weitere Kamera angeordnet wäre. Es kommt also nicht darauf an, dass die Kamera 10 frontseitig angeordnet ist - sie kann auch an der Seitenlinie und/oder gegenüberliegend zur Dachfläche des Kraftfahrzeuges 3 angeordnet sein.

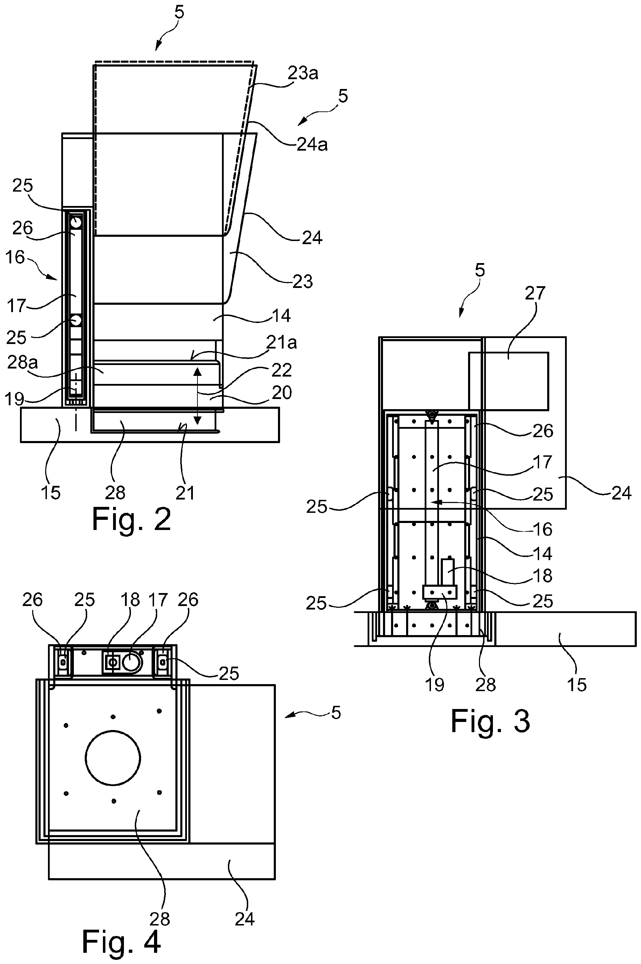

Die Figuren 2 bis 4 zeigen eine erste Ausführungsform eines höheneinstellbaren Terminals 5, wobei im Bereich einer Fundamentplatte 15 eine Ausnehmung vorhanden ist, in welche eine Trägerplatte 28 des Terminals 5 hinein absenkbar ist und zwar bis zur Grundlinie 21.

Es ergibt sich damit eine in die Fundamentplatte 15 hineinreichende Absenkposition der Trägerplatte 28, die somit um die Hubhöhe 22 auf die neue Grundlinie 21 a angehoben werden kann.

Die Hubhöhe 22 kann in großen Grenzen verändert werden. Sie kann sich im Bereich vorzugsweise von 20 bis 1,20 m bewegen. Es sind jedoch auch noch höhere Hubhöhen 22 möglich.

Im gezeigten Ausführungsbeispiel besteht die Hubeinrichtung 16 aus einem rückseitig am Terminalgehäuse 5 angeordneten weiteren Gehäuse, das in der Rückseite in Figur 3 und im Schnitt in Figur 4 dargestellt ist. Im Prinzip ist eine Standsäule 14 fest mit dem bewegbaren Teil der Hubeinrichtung 16 verbunden, nämlich mit einer nicht näher dargestellten Hubmutter, die mit einer drehbar angetriebenen Hubspindel 17 kämmt.

Die Hubspindel 17 wird von einem Antriebsmotor 18 drehend angetrieben und zwar über das in Figur 3 dargestellte Getriebe 19.

Nachdem sich die gesamte Unterseite der Standsäule 14 des Terminals 5 in der angehobenen Position von der Fundamentplatte 15 abhebt, kann der sich dazwischen bildende Hohlraum durch einen Abdeckbalg 20 abgedeckt sein.

Hier ist noch dargestellt, dass die Hubeinrichtung aus zwei parallel zueinander angeordneten Führungsschienen 26 besteht, in denen Laufrollen 25 im gegenseitigen Abstand zueinander fahrbar sind und dort abgestützt sind.

Statt einer Hubspindel 17 mit einer Hubmutter können selbstverständlich auch andere Hubwerke verwendet werden, wie bereits schon in der allgemeinen Beschreibung erwähnt. Insbesondere können auch Seilzüge, Kettentriebe, Zahnstangen mit zugeordneten Ritzeln und auch Zahnriemenantriebe verwendet werden.

Wichtig ist, dass die Bedieneinheit 23 in der abgesenkten Position gemäß Figur 2 in die neue Position der Bedieneinheit 23 a angehoben werden kann, um so die Bedienfläche 24 von der abgesenkten Position in die angehobene Position der Bedienfläche 24 a zu bringen.

Die Figur 3 zeigt noch, dass in der Bedienfläche 24 ein Bediendisplay 27 angeordnet sein kann.

Bereits vorstehend, anhand der Figur 1, wurde jedoch angegeben, dass statt eines Bediendisplays 27 auch andere Bedieneinheiten verwendet werden können wie z. B. die vorher genannten Ein- und Ausgabeeinheiten oder Bezahleinheiten.

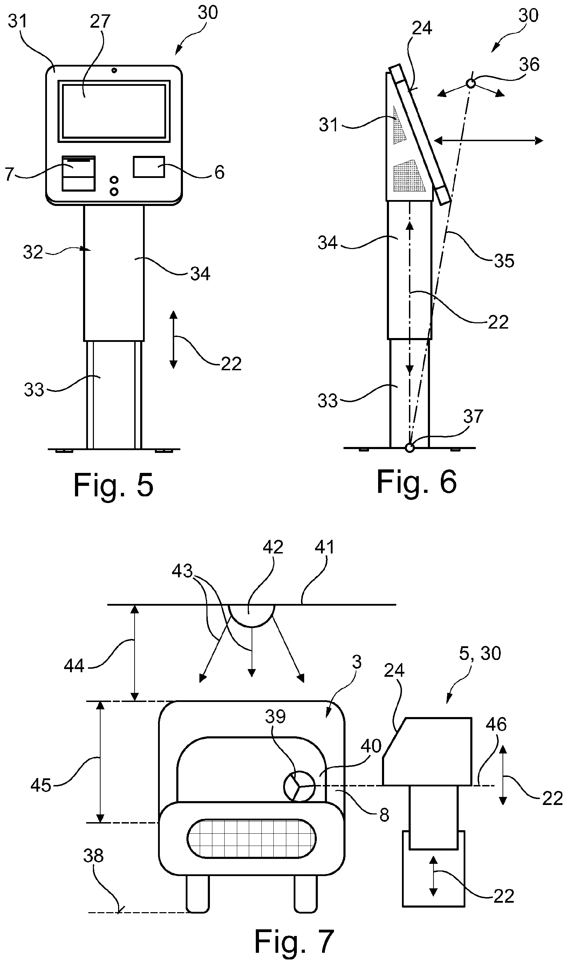

In der Figur 5 und 6 ist eine weitere Ausführungsform eines Terminals 30 dargestellt, welches im Wesentlichen eine teleskopierbare Hubsäule 32 aufweist. Dabei ist in einer bodenfesten Bodensäule 33 eine darüber liegende Obersäule 34 stufenlos in der Pfeilrichtung der Hubhöhe 22 verschiebbar und feststellbar angeordnet, auf der Obersäule ist der Bedienkopf 31 befestigt, an dem die Bedienfläche 24 angeordnet ist.

Die Figur 6 zeigt als weiteres Ausführungsbeispiel, dass die Erfindung nicht auf eine Hubverstellung in Pfeilrichtung 22 angewiesen ist, sondern es kann auch zusätzlich eine Neigung der Hubrichtung entsprechend der Hubneigung 35 erfolgen.

Dabei wird angenommen, dass bei Anheben der Obersäule 34 in eine höhere Hubstellung auch die Neigung in Pfeilrichtung 36 zunimmt, sodass sich die gesamte Bedienfläche 24 dem Fahrzeug und dem darin sitzenden Fahrer zuneigt, um eine bessere Bedienbarkeit der Bedienfläche 24 zu erreichen.

Dementsprechend kann der Bedienkopf 31 des Terminals 30 sowohl höheneinstellbar als auch neigungseinstellbar sein.

In Figur 6 wird noch angefügt, dass die Neigungseinstellung der Hubsäule 32 dadurch erfolgt, dass diese in einem bodenseitigen Schwenklager 37 aufgenommen ist und somit um das Schwenklager 37 herum in den Pfeilrichtungen 36 verschwenkbar ist.

Eine solche Neigbarkeit ist selbstverständlich bei allen Ausführungsbeispielen der Erfindung möglich und vorgesehen.

Die Figur 7 zeigt eine weitere Ausführungsform, wobei die optimale Referenzlinie 46, die für eine optimale Bedienbarkeit der Bedienfläche 24 sorgt, durch eine einfache Distanzmessung ermittelt wird.

Es bleibt hierbei offen, welche Art des Terminals verwendet wird. Es kann dabei das Terminal 5 nach den Figuren 1 bis 4 oder das Terminal 30 nach den Figuren 5 und 6 verwendet werden.

Wichtig ist jedenfalls, dass eine Hubhöhe 22 entweder im Unterteil oder im Oberteil stattfindet, wie dies in Figur 7 dargestellt ist.

Es können auch zwei verschiedene Hubeinrichtungen vorhanden sein, wie dies mit den beiden Doppelpfeilen in Figur 7 dargestellt ist.

Die Distanzmessung nach Figur 7 erfolgt dadurch, dass an der Decke 41 ein deckenseitiger Sensor 42 angeordnet ist, in dessen Sensorfeld 43 das Kraftfahrzeug 3 liegt, sodass die Dachhöhe, das heißt der Abstand 44 des Daches zur Decke hin, ermittelbar ist.

Aufgrund des ermittelten Abstandes 44 kann somit der Abstand 45 zwischen dem Dach und der Kühlerhaube des Fahrzeuges ermittelt werden, wobei dies ebenfalls über eine Distanzmessung erfolgt. Die Lage der Frontscheibe kann auch über seitliche, horizontale Lichtschranken erkannt werden, wie sie in Waschanlagen verwendet werden.

Somit kann über die Ermittlung des Abstandes 45 die optimale Referenzlinie 46 für die optimale Bedienbarkeit der Bedienfläche 24 ermittelt werden und dementsprechend kann die Hubhöhe des Terminals 5, 30 optimal eingestellt werden.

Es kann noch zusätzlich vorgesehen sein, dass das Lenkrad 39 erkannt wird und/oder auch der Fahrersitz 40 und/oder der Kopf des Fahrers erkannt wird.

In Figur 7 wird noch gezeigt, dass auch eine Distanzmessung zur Fahrebene 38 durch den deckenseitigen Sensor möglich ist, um unterschiedliche Fahrzeugtypen und Fahrzeugarten zu erkennen. Beispielsweise können auch Zweiradfahrzeuge, Dreiradfahrzeuge oder Mehrachsfahrzeuge erkannt werden.

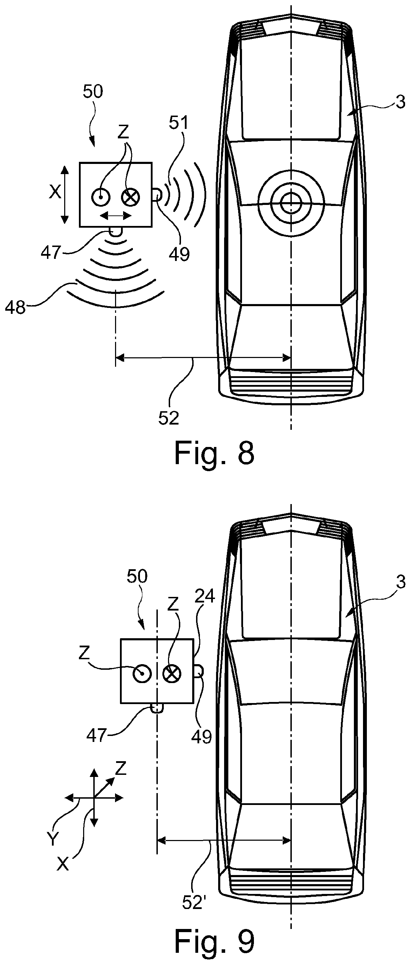

Die Figuren 8 und 9 zeigen ein weiteres Ausführungsbeispiel, bei dem nicht nur ein höhen- und/oder neigungseinstellbares Terminal 5,30 vorgesehen ist, sondern darüber hinaus ein Terminal 50, welches mindestens quer zur Fahrtrichtung Y verschiebbar und feststellbar angeordnet ist und/oder zusätzlich noch in Richtung zur Fahrtrichtung X verschiebbar angetrieben sein kann.

So zeigt die Figur 8 einen kollisionsfreien Abstand des Terminals 50 während des Einfahrens des Fahrzeuges 3 auf den Einfahrplatz, weil ein optimaler Fahrabstand 52 zwischen dem vom Fahrzeug 3 weggefahrenen Terminal 50 erreicht wurde.

Über geeignete Sensoren 47, 49 wird eine Distanzmessung über die Messfelder 48 und 51 durchgeführt, um den aktuellen Abstand des Terminals 50 zum Fahrzeug 3 zu ermitteln.

Selbst wenn ein Fahrzeug 3 gemäß Figur 8 schräg auf den Einfahrplatz 1 fährt, wird dies durch die Sensoren 47, 49 erkannt und das Terminal 50 wird so weit vom Fahrzeug entfernt, dass ein kollisionsfreier Fahrabstand 52 gegeben ist.

Erst wenn das Fahrzeug gemäß Figur 9 seine endgültige Bedienposition erreicht hat, wird das Terminal 50 an die Fahrerseite des Fahrzeuges herangefahren, indem eine Verschiebung in Y- und/oder X-Richtung erfolgt und zusätzlich noch eine Höhen- und/oder Neigungseinstellung in Z-Richtung erfolgen kann. Auch wird über die Sensoren 47, 49 der optimale minimale Abstand zur Fahrerseite des Fahrzeugs 3 ermittelt, um so eine leichte Bedienbarkeit der Bedienfläche 24 des Terminals zu ermöglichen.

Anstatt einer Typenerkennung oder einer Distanzmessung mit den Sensoren 47, 49 können auch lichtschrankengesteuerte Messfelder erzeugt werden, die beispielsweise die Frontseite des Fahrzeuges und die Heckseite des Fahrzeuges erkennen und beispielsweise auch die Seitenumrisse des Fahrzeuges, um so die Fahrzeugposition optimal zu bestimmen und so die Position des Terminals 5, 30, 50 zu Fahrerseite des Fahrzeuges 3 einstellen zu können.

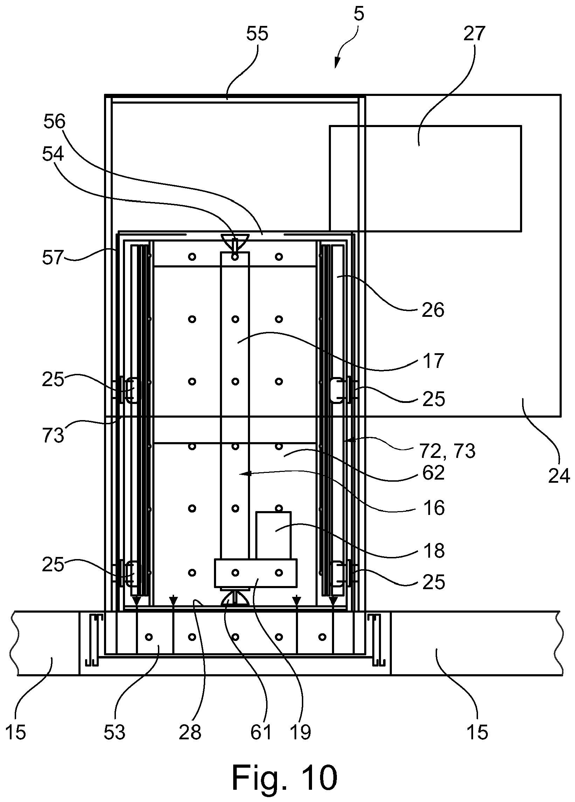

Die Figur 10 zeigt eine vergrößerte Darstellung der Figur 3, wo erkennbar ist, dass ein Rahmen 57 eine U-Form aufweist und im Wesentlichen aus zwei parallel zueinander angeordneten Hubeinrichtungen 16 besteht, von denen jede Hubeinrichtung 16 eine Vertikalschiene 73 aufweist, an der drehbar gelagerte Laufrollen 25 befestigt sind.

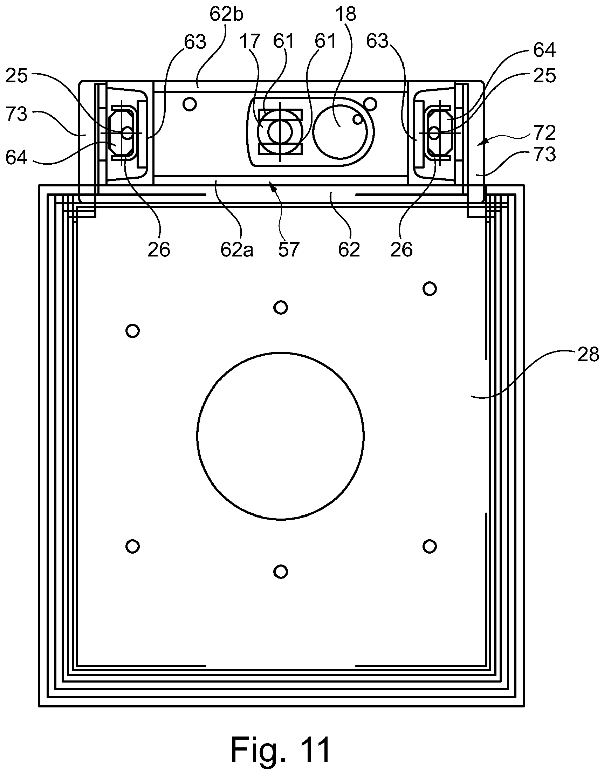

Die Laufrollen 25 stützen sich - wie in den Figuren 2 und 3 dargestellt - an den Innenseiten eines weiteren U-Profils an, welches zum Hubrahmen 57 gehört. Dies ist insbesondere aus den Figuren 10 und 11 zu entnehmen.
Dort sind die einander entgegengesetzt gerichteten U-förmigen Führungsschienen 26 erkennbar, an deren Innenseiten die jeweilige Laufrolle 25 abrollt.

Die Laufrollen 25 sind in zugeordneten Lagerböcken 64 drehbar gelagert, wo die Lagerböcke an dem ortsfesten Grundrahmen 62 befestigt sind. Der Grundrahmen 62 besteht im Wesentlichen aus den vorher genannten Vertikalschienen 73, die im gegenseitigen Abstand und parallel zueinander fest auf dem bodenseitigen Niveau 75 angeordnet sind.

Der Hubrahmen 57 besteht aus einer vertikalen Platte 62, in der eine Reihe von Haltebohrungen 65 angeordnet ist.

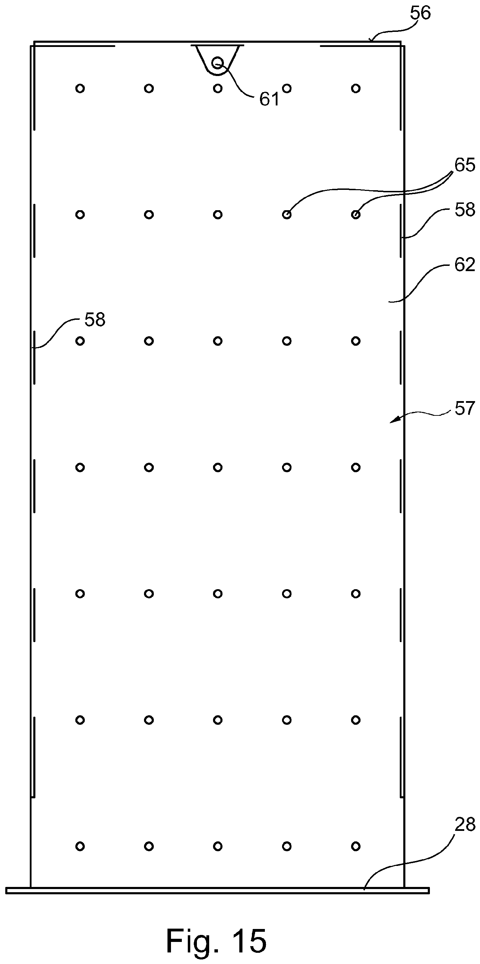

Die Vertikalplatte 62 weist nach hinten gerichtete Abkantungen auf, die als Abkantplatten 58 in Figur 15 dargestellt sind.

Die obere, vertikal abgekantete Platte wird als Hubplatte 56 bezeichnet, die ein oberes Stützlager 54 aufnimmt, an der sich der obere Teil des Hubzylinders 17 abstützt.

Der untere Teil des Hubzylinders 17 stützt sich in einem bodenseitigen Stützlager 61 gemäß Figur 10 ab, wobei dieses Stützlager 61 auf der bodenseitigen Trägerplatte 28 angeordnet ist.

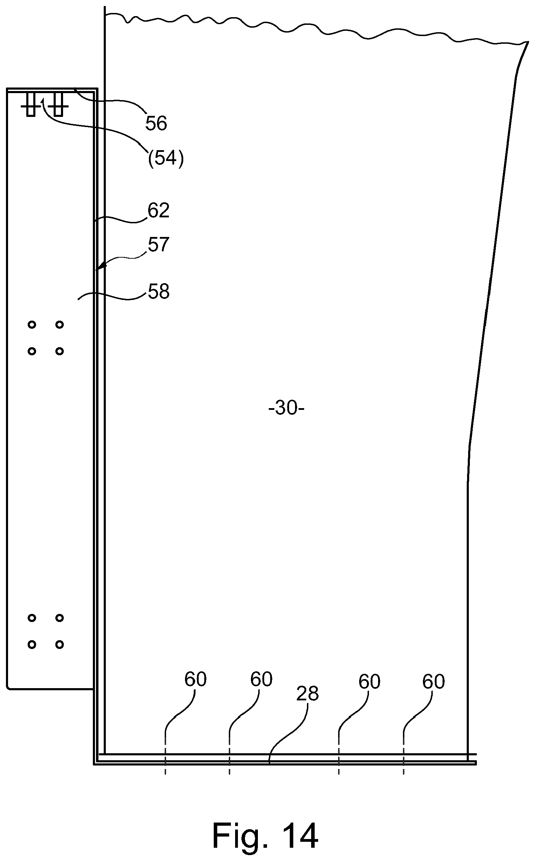

Vorteilhaft ist, dass die dem Hubrahmen 57 zugeordnete Trägerplatte 28 Verschraubungen 60 für die Befestigung des Terminals 30 (siehe Figur 14) aufweist und dass der gesamte Hubrahmen 57 in eine bodenseitige Ausnehmung 53 versenkbar ist, wie dies in Figur 10 dargestellt ist.

Die Ausnehmung 53 ist im Bereich einer Fundamentplatte 15 angeordnet und kann eine beliebige Tiefe aufweisen.

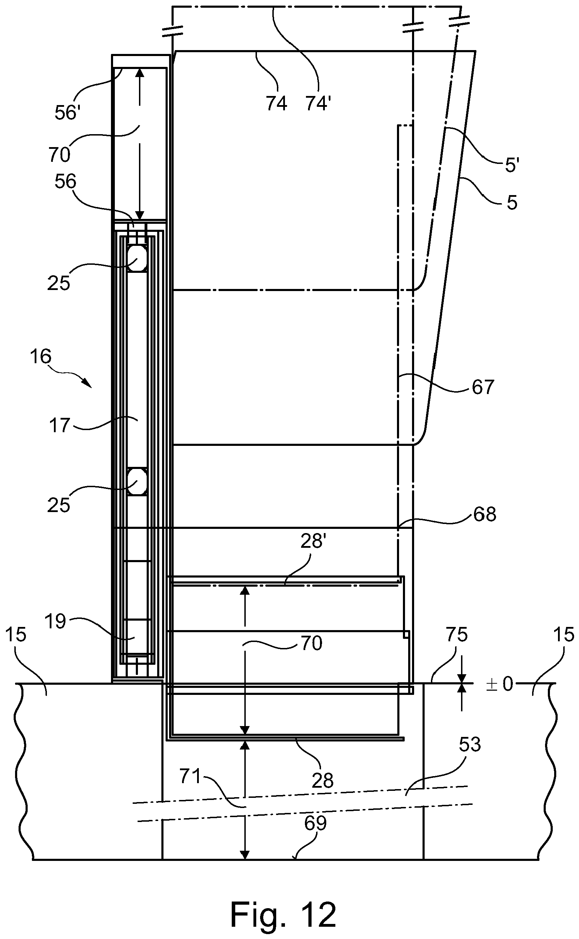

In Figur 12 ist dargestellt, dass das Terminal 5 in die Stellung 5' angehoben werden kann, und zwar um den Hubweg 70, so dass eine stufenlose Anpassung an die Bediensituation möglich ist, wie in der vorstehenden Beschreibung anhand der Figuren 1 bis 9 ausführlich beschrieben wurde.

Unabhängig von diesem ersten Hubweg 70, welcher der erleichterten Bedienung des Terminals 5 dient, ist ein weiterer Hubweg 71 vorgesehen, der sich zu dem Hubweg 70 addiert und der es ermöglicht, dass die bereits schon in der unteren Stellung angeordnete Trägerplatte 28 des Hubrahmens 57 nunmehr weiter um den Hubweg 71 entweder teilweise oder vollständig bis auf das untere Niveau des Bodens 61 in der Ausnehmung 53 verfahren werden kann.

Der besseren Übersichtlichkeit halber ist der Hubweg 71 nur verkürzt dargestellt. In Wirklichkeit kann er so tief ausgebildet sein, dass das gesamte Terminal 5, 30 teilweise oder vollständig unterhalb des Niveaus 75 (+/- 0) in die Fundamentplatte 15 abgesenkt werden kann.

Im letzten Fall ist das gesamte Terminal 5, 5', 30 versenkt in der bodenseitigen Ausnehmung 53 eingefahren, und im Bereich des Niveaus 75 kann eine Abdeckplatte vorhanden sein, welche die nach oben gerichtete Öffnung der Ausnehmung 53 abschließt, um auch die Abdeckplatte 74 des Terminals 5, 30 gegen Beschädigung zu schützen.

Der Grundrahmen 72 ist gemäß Figur 10 in einem bodenfesten Abdeckgehäuse 55 untergebracht, um die gesamte Hubeinrichtung 16 gegen Einwirkung von Schmutz und Beschädigung zu schützen.

Dabei ist es vorteilhaft, dass das Abdeckgehäuse 55 bodenfest angeordnet ist, weil eine Versenkbarkeit des feststehenden, den Grundrahmen 72 umschließende Abdeckgehäuses 55 nicht notwendig ist, weil dort keine wertvollen oder beschädigungsrelevanten Teile vorhanden sind. Vorteil ist jedoch, dass das Terminal 5, 5', 30 vollständig in den Boden zusammen mit dem Hubrahmen 57 versenkbar sein kann, um dieses Terminal teilweise oder vollständig gegen Beschädigungen zu schützen.

Die Figur 12 zeigt, dass auch eine eventuell vorhandene Tür mit einer vertikalen Türkante 67 gegen Öffnung oder Aufbrechen gesichert ist, wenn das Terminal 5 auch nur teilweise in die bodenseitige Ausnehmung 53 eingefahren wird. Es kann in diesem Fall die untere, horizontale Türkante 68 nicht geöffnet werden, weil sie bereits schon in den Bereich der bodenseitigen Ausnehmung 53 versenkt ist und dort bei willkürlicher Öffnung an die Innenwände anschlagen würde.

Gemäß der Figur 11 besteht der Hubrahmen 57 aus zwei Abkantungen im Bereich der Hubeinrichtung 16, nämlich aus den beiden zueinander parallelen Vertikalplatten 62a und 62b.

Insgesamt ergibt sich ein größeres U-Profil 63, welches das kleinere U-Profil 26 umfasst, das schließlich der Längsführung am Grundrahmen 72 dient.

Die Figur 15 zeigt, dass mit Anordnung unterschiedlicher Haltebohrungen 65 im Bereich der Vertikalplatte 62 des Hubrahmens 57 die Möglichkeit besteht, ein Terminal 30 beliebiger Bauart und Abmessungen in beliebigen Höhen an dieser Vertikalplatte 62 zu befestigen, wodurch sich eine große Montagefreiheit ergibt.

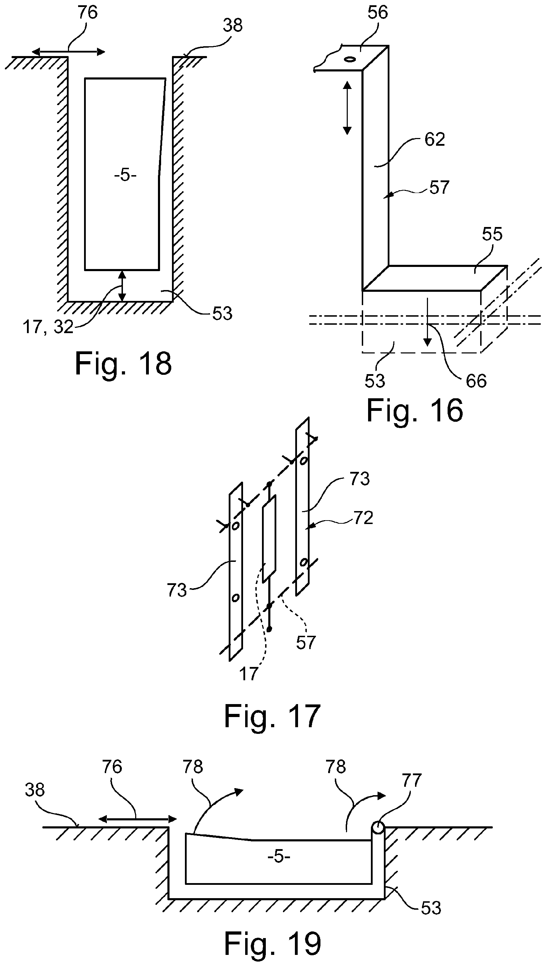

Die Figur 16 zeigt schematisiert die Versenkbarkeit des Hubrahmens 57 in der bodenseitigen Ausnehmung 53 in Pfeilrichtung 66. Lediglich aus zeichnerischen Gründen ist die Ausnehmung 53 nur teilweise dargestellt. Sie kann entweder in dieser Tiefe vorgesehen werden, um dafür zu sorgen, dass sowohl die vertikale Türkante 67 mindestens teilweise in die Ausnehmung 53 einfährt und auf jeden Fall aber auch die horizontale Türkante 68 des Terminals 30, um so die Tür gegen gewaltsames Öffnen zu schützen.

Die Figur 17 zeigt schematisiert das Zusammenwirken des ortsfesten Grundrahmens 72 mit dem verschiebbar dort geführten Hubrahmen 57.

Die Erfindung betrifft auch ein Verfahren, das in einer bevorzugten Ausgestaltung vorsieht, dass zum Betrieb eines Terminals 3, 30, 50, das in Abhängigkeit von der Position des Fahrersitzes 13 und/oder von der Position des Fahrers mindestens höhen-einstellbar ausgebildet ist, wobei das Terminal 5, 30, 50 bei Erkennung eines sich nähernden Kraftfahrzeuges aus einer bodenseitigen Ausnehmung 53 heraus gefahren wird.

Damit ist das Terminal während der Ruhezeiten optimal gegen Vandalismus und Aufbruchsversuche geschützt.

In analoger Weise wird es bevorzugt, wenn das Terminal 5, 30, 50 bei Erkennung eines sich entfernenden Kraftfahrzeuges mindestens teilweise oder vollständig in die bodenseitige Ausnehmung 53 eingefahren wird.

Um eine Kollision von Fahrzeugteilen bei der Annäherung des Kraftfahrzeuges an ein Terminal zu vermeiden, wird eine mindestens zweistufige Hubbewegung des Terminals vorgesehen. Bei Annäherung des Fahrzeuges an das Terminal wird dieses nur um ein geringes Maß aus der bodenseitigen Ausnehmung 53 ausgefahren, um eine Bereitschaftsposition einzunehmen, aber nicht die Gefahr besteht, dass Fahrzeugteile (z.B. die Stoßstange) mit dem Terminal 5, 30, 50 kollidieren. Erst wenn die Gefahr der Kollision nicht mehr besteht, wird das Terminal 5, 30, 50 vollständig ausgefahren und in eine bedienungsgünstige Position in Richtung zur Fahrertür gebracht. Das Terminal kann zur Erreichung der bediengünstigen Position vorzugsweise in vertikaler Richtung angetrieben. Darauf ist die Erfindung nicht beschränkt. In anderen Ausgestaltungen kann eine Schwenkkurve oder eine Bogenkurve für den Bewegungsantrieb des Terminals vorgesehen sein.

Besonders vorteilhaft ist, dass die Vorrichtung nach der Erfindung für alle Automaten-bzw. Bedienterminal-Hersteller anwendbar ist.

Die Figur 18 zeigt eine vollständige Versenkung eines Terminal 5 in einer bodenseitigen Ausnehmung 53, wobei der Hubantrieb 17, 32 lediglich schematisiert dargestellt ist. Es ist lediglich angedeutet, dass der Hubantrieb 17,32 am Grund der Ausnehmung 53 angeordnet sein kann. In einer nicht näher dargestellten anderen Ausführungsform kann er jedoch an den Seitenwänden der Ausnehmung angeordnet sein, wobei dann das Terminal in der Art einer Schienenführung im Innenraum der Ausnehmung 53 heb-und senkbar angeordnet ist.

In der Figur 19 ist eine andere Versenkt-Variante des Terminals 5 dargestellt, die darin besteht, dass das Terminal 5 nicht stehend - wie in den vorstehenden Figuren gezeigt - versenkt wird, sondern von einer stehenden in eine liegende Stellung verschwenkt wird. Dazu ist an einer horizontalen Kante der Ausnehmung 53 eine Schwenkachse 77 angeordnet, die mit der Fußseite des Terminal-Gehäuses verbunden ist. Mit einem nicht näher dargestellten Schwenkantrieb kann somit das Terminal 5 in eine liegende Stellung in die Ausnehmung 53 hinein verschwenkt werden oder in Pfeilrichtung 78 in eine stehende Stellung herausgeschwenkt werden.

Es kann ein Schiebedeckel 76 vorgesehen sein, der die Öffnung der Ausnehmung 53 in Richtung zur Fahrbahnebene 38 verschließt und öffnet. Statt eines Schiebedeckels 76 kann auch ein Klappdeckel verwendet werden.

### Zeichnungslegende

- 1.: Einfahrplatz
- 2.: Pfeilrichtung
- 3.: Fahrzeug
- 4.: Verkehrsinsel
- 5.: Terminal
- 6.: Ein- und Ausgabeeinheiten
- 7.: Bezahleinheit
- 8.: Fahrerfenster
- 9.: Bedienungsposition
- 10.: Kamera
- 11.: Blickfeld (von 10)
- 12.: Deckensensor
- 13.: Fahrersitz
- 14.: Standsäule
- 15.: Fundamentplatte
- 16.: Hubeinrichtung
- 17.: Hubspindel
- 18.: Antriebsmotor
- 19.: Getriebe
- 20.: Abdeckbalg
- 21.: Grundlinie
- 21a.: Grundlinie
- 22.: Hubhöhe
- 23.: Bedieneinheit
- 23a.: Bedieneinheit
- 24.: Bedienfläche
- 24a.: Bedienfläche
- 25.: Laufrolle
- 26.: Führungsschiene
- 27.: Bediendisplay
- 28.: Trägerplatte
- 28a.: Trägerplatte
- 29. 30.: Terminal
- 31.: Bedienknopf
- 32.: Hubsäule
- 33.: Bodensäule
- 34.: Obersäule
- 35.: Hubneigung
- 36.: Pfeilrichtung
- 37.: Schwenklager
- 38.: Fahrebene
- 39.: Lenkrad
- 40.: Fahrersitz
- 41.: Decke
- 42.: Sensor
- 43.: Sensorfeld
- 44.: Abstand (Decke)
- 45.: Abstand (Dach)
- 46.: Referenzlinie
- 47.: Sensor
- 48.: Messfeld
- 49.: Sensor
- 50.: Terminal
- 51.: Messfeld
- 52.: Fahrabstand
- 53.: Ausnehmung (15)
- 54.: Stützlager (für 16)
- 55.: Abdeckgehäuse
- 56.: Hubplatte
- 57.: Hubrahmen
- 58.: Abkantplatte
- 60.: Verschraubung
- 61.: Stützlager (für 16 unten)
- 62.: Vertikalplatte
- 62a.: Vertikalplatte (von 56)
- 62b.: Vertikalplatte (von 56)
- 63.: U-Profil (von 57)
- 64.: Lagerbock (von 25)
- 65.: Haltebohrung
- 66.: Pfeilrichtung
- 67.: Türkante (vertikal)
- 68.: Türkante (horizontal)
- 69.: Boden (von 53)
- 70.: Hubweg
- 71.: Hubweg (versenkt)
- 72.: Grundrahmen
- 73.: Vertikalschiene (von 72)
- 74.: Abdeckplatte
- 75.: Niveau
- 76: -Schiebedeckel
- 77: Schwenkachse
- 78: Pfeilrichtung

## Patentansprüche

1. Terminal (5, 30, 50) für die Betätigung von einem Fahrzeug (3) aus, bestehend aus mindestens einer Bedienfläche (24) mit ein oder mehreren Ein- und/oder Ausgabeeinheiten (6, 7), wobei das Terminal (5, 30, 50) in Abhängigkeit von der Position des Fahrersitzes (13) und/oder von der Position des Fahrers mindestens höhen-einstellbar ausgebildet ist, **dadurch gekennzeichnet, dass** das Terminal (5, 30, 50) mindestens teilweise in einer bodenseitigen, vertikalen Ausnehmung (53) versenkbar ist und bei Annäherung eines Kraftfahrzeuges aus der versenkten Position in eine für den Fahrer des Kraftfahrzeuges optimale Bedienungsposition bringbar ist.

2. Terminal nach Anspruch 1, **dadurch gekennzeichnet, dass** das Terminal (5, 30, 50) vollständig in die Ausnehmung (53) einfahrbar ist und dort diebstahl- und vandalismus-gesichert gelagert ist..

3. Terminal nach Anspruch 1 oder 2, **dadurch gekennzeichnet, dass** das Terminal (5, 30, 50) an einem vertikal verschiebbaren Hubrahmen (57) befestigt ist, der an einem bodenfesten Grundrahmen (72) verschiebbar angeordnet ist.

4. Terminal nach einem der Ansprüche 1 bis 3, **dadurch gekennzeichnet, dass** das Terminal (5, 30, 50) auch in seiner Neigung in Bezug zum Fahrerfenster (8) des Fahrzeuges (3) einstellbar ist.

5. Terminal nach mindestens einem der Ansprüche 1 bis 4, **dadurch gekennzeichnet, dass** das Terminal (5, 30, 50) zusätzlich bezüglich seines Abstandes (Y-Richtung) zum Fahrzeug (3) und/oder bezüglich seiner Verschiebung in Längsrichtung (X-Richtung) des Fahrzeuges (3) verschiebbar und einstellbar ausgebildet ist.

6. Terminal nach mindestens einem der Ansprüche 1 bis 5, **dadurch gekennzeichnet, dass** die Zu- und Wegverschiebung des Terminals (5, 30, 50) quer zur Fahrtrichtung des Fahrzeuges (3) und/oder die Höheneinstellung von einer Distanzmessung zwischen dem Terminal (5, 30, 50) und dem Fahrzeug (3) gesteuert ist.

7. Terminal nach mindestens einem der Ansprüche 1 bis 6, **dadurch gekennzeichnet, dass** die Verschiebeantriebe des Terminals (5, 30 50) in X- und/oder Y- und/oder Z-Richtung hydraulisch oder pneumatisch oder elektromagnetisch oder motorisch angetrieben sind.

8. Terminal nach mindestens einem der Ansprüche 1 bis 7, **dadurch gekennzeichnet, dass** eine am Terminal (5, 30, 50) angeordnete Zugangstür (67, 68) mindestens teilweise in die bodenseitige Ausnehmung (53) einfahrbar ist.

9. Verfahren zum Betrieb eines Terminals (3, 30, 50), das in Abhängigkeit von der Position des Fahrersitzes (13) und/oder von der Position des Fahrers mindestens höhen-einstellbar ausgebildet ist, **dadurch gekennzeichnet, dass** das Terminal (5, 30, 50) bei Erkennung eines sich nähernden Kraftfahrzeuges aus einer bodenseitigen Ausnehmung (53) heraus gefahren wird.

10. Verfahren nach Anspruch 9, **dadurch gekennzeichnet, dass** das Terminal (5, 30, 50) bei Erkennung eines sich entfernenden Kraftfahrzeuges mindestens teilweise oder vollständig in die bodenseitige Ausnehmung (53) eingefahren wird.

11. Verfahren nach einem der Ansprüche 9 oder 10, **dadurch gekennzeichnet, dass** bei der Annäherung eines Kraftfahrzeuges an das Terminal (5, 30, 50) das Terminal nur teilweise aus der bodenseitigen Ausnehmung (53) soweit heraus gefahren wird, dass Teile des Kraftfahrzeuges nicht mit dem Gehäuse des Terminals kollidieren können.

12. Verfahren nach Anspruch 11, **dadurch gekennzeichnet, dass** bei Erreichung des Kraftfahrzeuges am Terminal (5, 30, 50) das Terminal (5, 30, 50) in seine endgültige Bedienstellung an das Kraftfahrzeug heran gefahren wird.
